# EUROPÄISCHE PATENTSCHRIFT

(11) **EP 2 599 188 B1**
(45) Veröffentlichungstag und Bekanntmachung des Hinweises auf die Patenterteilung: **13.09.2017**
(21) Anmeldenummer: 11720438.8
(22) Anmeldetag: 11.05.2011
(51) Int. Cl.: H02K 3/12, H02K 3/50

(54) **AKTIVTEIL EINER ELEKTRISCHEN MASCHINE MIT SCHRÄGEN SPULEN IM WICKELKOPFBEREICH**
ACTIVE PART OF AN ELECTRICAL MACHINE HAVING INCLINED COILS IN THE WINDING HEAD AREA
PARTIE ACTIVE D'UNE MACHINE ÉLECTRIQUE AYANT DES BOBINES OBLIQUES DANS LA ZONE DE LA TÊTE D'ENROULEMENT

(30) Priorität: 27.08.2010 DE 102010039871
(43) Veröffentlichungstag der Anmeldung: 05.06.2013
(73) Patentinhaber: Siemens Aktiengesellschaft, 80333 München (DE)
(72) Erfinder: SCHÖNBAUER, Norbert, 94072 Bad Füssing (DE); MÖHLE, Axel, 12163 Berlin (DE)
(86) Internationale Anmeldenummer: PCT/EP2011/057614
(87) Internationale Veröffentlichungsnummer: WO 2012/025260

(56) Entgegenhaltungen:
- EP-A2- 1 643 619
- WO-A1-92/05618
- WO-A1-2008/107513
- DE-A1-102005 059 846
- JP-U- 58 166 271
- US-B1- 6 229 241

## Beschreibung

Die vorliegende Erfindung betrifft ein Aktivteil einer elektrischen Maschine mit einem Träger und mit mehreren Spulen, die an dem Träger angeordnet sind und die jeweils mehrere Teilleiter aufweist. Darüber hinaus besitzt das Aktivteil einen Wickelkopfbereich, in dem die Spulen jeweils bogenförmig aus dem Träger ragen und miteinander verschaltet sind. Jede der Spulen im Wickelkopfbereich besitzt einen Spulenbogen, und die Mittellinie der Spule in dem Spulenbogen verläuft in einer Ebene. Die Teilleiter der Spule in dem Spulenbogen der Spule verlaufen parallel zu der Ebene und bilden selbst jeweils einen Teilleiterbogen.

Elektrische Maschinen wie Motoren, Generatoren und Transformatoren besitzen jeweils ein oder mehrere Aktivteile, die magnetisch aktiv sind. Ein Motor beispielsweise weist einen Ständer und einen Läufer als Aktivteile auf.

In den Ständer und/oder Läufer eines Motors oder Generators können Spulen eingelegt bzw. eingewickelt sein. Typischerweise befinden sich die Spulen dann in oder an einem Blechpaket. In der Regel ragen aus den Stirnseiten zylindrischer Blechpakete die Spulen heraus und bilden zusammen einen Wickelkopf des Läufers bzw. Ständers.

Der Wickelkopf elektrischer Maschinen gehört zu den magnetisch inaktiven Teilen, die nicht zur Drehmomentbildung beitragen. Daher ist es erstrebenswert, die Leiterlänge und die Ausladung des Wickelkopfs möglichst gering zu halten, um unnötigen Platzbedarf, Gewicht und Verluste zu vermeiden.

Die EP 1 643 619 A2 beschreibt eine elektrische Maschine mit einem Träger, der als zylinderförmiges Blechpaket ausgebildet ist. An dem Träger sind mehrere Spulen angeordnet, die jeweils mehrere Teilleiter aufweisen. In einem Wickelkopfbereich ragen die Spulen jeweils bogenförmig aus dem Träger heraus. Jede der Spulen besitzt im Wickelkopfbereich einen Spulenbogen, wobei eine Mittellinie der Spule in dem Spulenbogen im Wesentlichen in einer Ebene verläuft und die Teilleiter der Spule in dem Spulenbogen der Spule parallel zu der Ebene verlaufen und selbst jeweils Teilleiterbögen bilden. Die Scheitelpunkte der Teilleiterbögen der Spule bilden eine Neigungslinie. Die Neigungslinien der Scheitelpunkte der Teilleiterbögen der Spulen für die Phasen V und W sind sowohl schräg zu einer Stirnfläche des Trägers als auch schräg zu der Hauptachse des Trägers angeordnet. Dies gilt jedoch nicht für die Spulen der Phase U, also nicht für jede der Spulen im Wickelkopf. Denn die Neigungslinien der Scheitelpunkte der Teilleiterbögen der Spulen für die Phase U sind parallel zu der Hauptachse des Trägers, also nicht schräg zu der Hauptachse des Trägers angeordnet.

Die WO 2008/107513 A1 beschreibt einen Spulenkopf mit einer Neigungslinie der Scheitelpunkte der Teilspulenbögen, die schräg zu einer Stirnfläche des Trägers als auch schräg zu der Hauptachse des Trägers angeordnet ist.

Die WO 92/05618 A1 beschreibt eine Wickelanordnung, die einen Stator mit Spulen zeigt, die alle in Richtung Luftspalt konisch zulaufen und deren Neigungslinie der Scheitelpunkte der Teilleiterbögen sowohl schräg zu einer Stirnfläche des Trägers als auch schräg zu der Hauptachse des Trägers angeordnet sind.

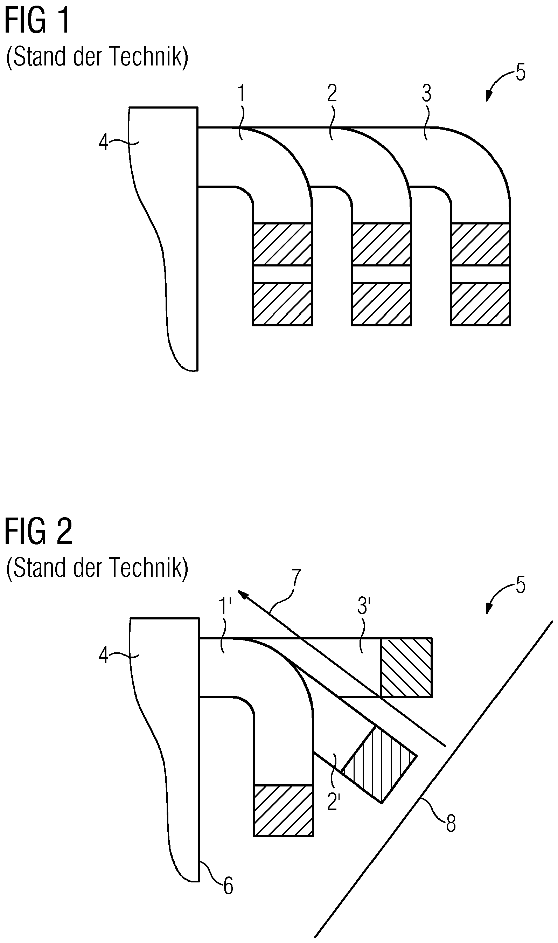

FIG 1 zeigt beispielhaft einen herkömmlichen Wickelkopf einer Drei-Etagenwicklung. Dies bedeutet, dass die hier konzentrischen Spulen 1, 2 und 3 in drei Etagen bzw. drei Ebenen übereinanderliegen. Die drei Spulen ragen aus einem Blechpaket 4. Die Spulen 1, 2 und 3 sind in einem Längsschnitt, bezogen auf den zugehörigen Ständer oder Läufer dargestellt. Das äußerste Ende jeder Spule in dem Wickelkopfbereich 5 weist hier senkrecht nach unten.

FIG 2 zeigt eine Variante eines Wickelkopfs. Auch hier treten die einzelnen Spulen 1', 2' und 3' zunächst senkrecht aus der Stirnseite 6 des Blechpakets 4. Die erste Spule 1' ist wie in dem Beispiel von FIG 1 senkrecht nach unten gebogen. Das Ende der Spule 1' verläuft also parallel zu der Stirnseite 6. Die zweite Spule 2' hingegen verläuft am Ende in einem 45°-Winkel zu der Stirnfläche 6. Sie besitzt dementsprechend eine Neigungslinie 7, die in FIG 2 mit einem Pfeil angedeutet ist. Senkrecht zu dieser Linie 7 ist eine Neigungsebene 8 definiert. Das äußerste Ende der Spule 2' verläuft parallel zu dieser Neigungsebene 8. Wenn die Spulen 1', 2' und 3' durch Teilleiter gebildet werden, liegen diese Teilleiter senkrecht zu der Neigungsebene 8 übereinander.

Die dritte Spule 3' verläuft in dieser Schnittansicht geradlinig aus der Stirnseite 6 des Blechpakets 4 heraus. Die Neigungsebene dieser Spule 3' verläuft somit parallel zu der Stirnseite 6. Die Neigungsebene der ersten Spule 1' hingegen steht in einem 90°-Winkel zu der Stirnfläche 6.

Kennzeichnend für die klassische Ausführung der in den FIG 1 und FIG 2 dargestellten Wickelköpfe ist, dass sie unterschiedlich geneigt sein können und alle Leiter bzw. Teilleiter der jeweiligen Spule genau übereinanderliegend senkrecht zur jeweiligen Neigungsebene stehen. Die an den Wickelkopf anzubringenden Verschaltungen machen den Wickelkopf insgesamt noch ausladender.

Die Aufgabe der vorliegenden Erfindung besteht somit darin, ein Aktivteil einer elektrischen Maschine und insbesondere deren Wickelkopfbereich kompakter zu gestalten.

Erfindungsgemäß wird diese Aufgabe gelöst durch ein Aktivteil einer elektrischen Maschine mit einem Träger, der als zylinderförmiges Blechpaket ausgebildet ist, mehreren Spulen, die an dem Träger angeordnet sind und die jeweils mehrere Teilleiter aufweisen, und einem Wickelkopfbereich, in dem die Spulen jeweils bogenförmig aus dem Träger ragen und miteinander verschaltet sind, wobei jede der Spulen im Wickelkopfbereich einen Spulenbogen besitzt und die Mittellinie der Spule in dem Spulenbogen im Wesentlichen in einer Ebene verläuft, und die Teilleiter der Spule in dem Spulenbogen der Spule parallel zu der Ebene verlaufen und selbst jeweils Teilleiterbögen bilden, wobei die Scheitelpunkte der Teilleiterbögen der Spule eine Neigungslinie bilden, wobei die Neigungslinie jeder der Spulen sowohl schräg zu einer Stirnfläche des Trägers als auch schräg zu der Hauptachse des Trägers angeordnet ist, wobei die Ebenen von drei benachbarten Spulen die Winkel 0°, 45° und 90° gegenüber einer Stirnfläche des Trägers einnehmen, aus der die Spulen ragen.

In vorteilhafter Weise kann durch den schrägen Verlauf der Teilleiter Platz gewonnen werden, der sich für Verschaltungen, z.B. Ringleitung etc., ausnutzen lässt. Dadurch lässt sich der Wickelkopfraum insgesamt besser nutzen, so dass letztlich ein kompakteres Aktivteil hergestellt werden kann.

Vorzugsweise ist das Aktivteil als Ständer oder Läufer ausgebildet. Damit kann die entsprechende elektrische Maschine kompakter aufgebaut werden als eine Maschine mit einem herkömmlichen Ständer bzw. Läufer mit üblicher Wickelkopfgestaltung.

An der Neigungslinie der Teilleiterbögen der Spule kann ein Verschaltungselement angeordnet sein. Damit wird die Schräge der Spule, an der der Raumgewinn gegenüber herkömmlichen Spulen erreicht wird, zum Unterbringen von Verschaltungselementen genutzt. Generell können die Verschaltungselemente an die Schrägen der Spulen angeschmiegt sein, wodurch insgesamt Bauraum eingespart wird.

In einer bevorzugten Ausgestaltung sind die mehreren Spulen im Ständer oder Läufer in Umfangsrichtung verteilt angeordnet, und die Ebenen benachbarter Spulen im Wickelkopfbereich sind relativ zueinander geneigt. Dies hat den Vorteil, dass auch unter Einhaltung der erforderlichen Luft- und Kriechstrecken das Aktivteil bzw. der Läufer oder Ständer kompakter gestaltet werden.

Die Ebenen von drei benachbarten Spulen nehmen gegenüber einer Stirnfläche des Trägers, aus der die Spulen ragen, die Winkel 0°, 45° und 90° ein. Damit sind die Spulen auch im Hinblick auf ihre Neigung im Wickelkopfbereich verteilt angeordnet. Insbesondere können den drei benachbarten Spulen die Phasen U, V und W eines Drehstromsystems zugeordnet werden.

Die Spulen können beispielsweise konzentrische Spulen sein. Die Erfindung lässt sich also generell für konzentrische und nichtkonzentrische Spulen ausnutzen.

Weiterhin können die drei Spulen unterschiedliche Länge besitzen. Dies ist für die Wirkung der Spulen unkritisch und bringt aber Vorteile hinsichtlich der Einsparung von Bauraum. Vorzugsweise wird das erfindungsgemäße Aktivteil, wie bereits angedeutet wurde, in einem Motor oder einem Generator eingesetzt.

Die vorliegende Erfindung wird anhand der beigefügten Zeichnungen näher erläutert, in denen zeigen:
- FIG 1: einen Wickelkopf einer Drei-Etagenwicklung mit nach unten geneigten Spulen gemäß dem Stand der Technik;
- FIG 2: einen Wickelkopf einer Drei-Etagenwicklung mit unterschiedlich geneigten Spulen gemäß dem Stand der Technik und
- FIG 3: einen Wickelkopf einer Drei-Etagenwicklung mit unterschiedlich geneigten Spulen gemäß der vorliegenden Erfindung.

Die nachfolgend näher geschilderten Ausführungsbeispiele stellen bevorzugte Ausführungsformen der vorliegenden Erfindung dar.

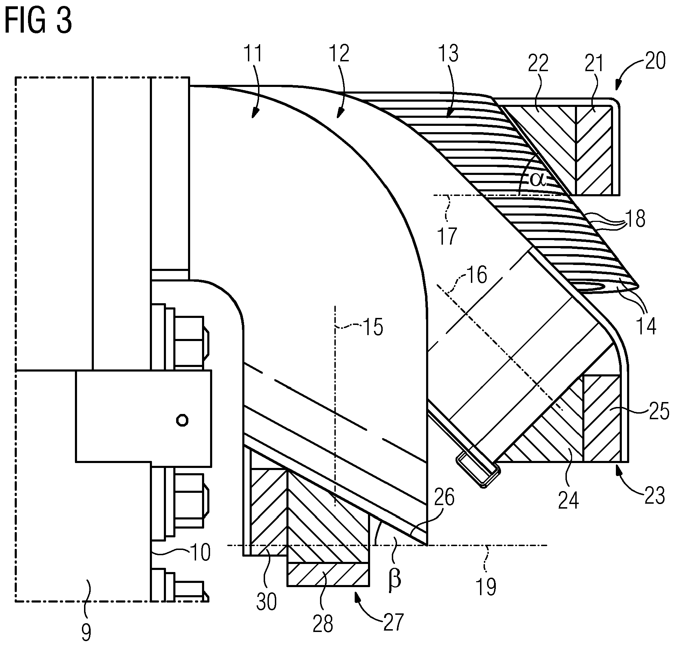

In FIG 3 ist beispielhaft ein Wickelkopfbereich eines Ständers einer elektrischen Maschine dargestellt. Es ist das Blechpaket 9 des Ständers zu erkennen. Das zylinderförmige Blechpaket 9 besitzt eine Stirnseite 10, aus der hier drei Spulen 11, 12 und 13 ragen. Die vorderen beiden Spulen 11 und 12 sind mit einer Isolierung dargestellt, während die hintere Spule 13 blank ohne die Isolierung dargestellt ist. Es sind daher die einzelnen Teilleiter der Spule 13 zu erkennen.

Jede der Spulen 11, 12 und 13 verläuft aus der Stirnseite 10 des Blechpakets 9 heraus, macht im Wickelkopfbereich einen Bogen und ist wieder zurück in das Blechpaket 9 geführt. Die Mittellinie 15, 16, 17 jeder Spule 11, 12, 13 verläuft in dem jeweiligen Bogen der Spule in einer Ebene. Diese Ebene steht senkrecht auf der jeweiligen Neigungsebene einer Spule (vgl. Neigungsebene 8 von Spule 2' von FIG 2). In FIG 3 ist die Neigungsebene 19 von Spule 11 eingezeichnet. Sie erstreckt sich in einem Winkel von 90° gegenüber der Stirnseite 10 des Blechpakets 9. Analog hierzu hätte die Neigungsebene von Spule 12 einen Winkel von 45° und die Neigungsebene der Spule 13 einen Winkel von 0°.

Die Teilleiter 14 der Spule 13 liegen bezüglich der Ebene, die durch die Mittellinie 17 definiert ist, nicht senkrecht übereinander. Stattdessen liegen die Teilleiter 14 bezogen auf diese Ebene schräg übereinander. Dies bedeutet, dass die Scheitelpunkte 18 der Teilleiterbögen auf einer Linie liegen, die mit der durch die Mittellinie 17 beschriebenen Ebene den Winkel α einschließt. Die Kontur der Spule betrachtet in einer Längsseitenansicht des Ständers verläuft also in dem Winkel α schräg gegenüber der genannten Ebene. Dementsprechend nimmt die Kontur bzw. die Linie der Scheitel der Teilleiterbögen gegenüber der in FIG 3 senkrecht verlaufenden Neigungsebene (der Übersicht halber in FIG 3 nicht eingezeichnet, einen Winkel von 90°- α ein.

Durch den schrägen Verlauf der Spule 13 am äußeren Rand des Wickelkopfs wird Platz gewonnen, der hier für eine Verschaltungseinrichtung 20 genutzt wird. Sie dient in üblicher Weise zum Verschalten der einzelnen Spulen 11, 12 und 13 mit weiteren Spulen des Ständers. Die Verschaltungseinrichtung 20 besitzt beispielsweise einen Kupferleiter 21, um eine Ringleitung zu realisieren. Der Kupferleiter 21 ist mit einem Isolator 22 an der schrägen Wicklung 13 abgestützt.

Die Spule 12 ist hier nicht schräg gegenüber der Ebene ausgeführt, die durch die Ebene der bogenförmigen Mittellinie 16 aufgespannt ist. Ihre Kontur verläuft also auch nicht schräg sondern parallel zu ihrer Neigungsebene. Die Neigungsebene besitzt hier einen 45°-Winkel gegenüber der Stirnfläche 10 des Blechpakets 9. Die Scheitel der bogenförmigen Teilleiter (in FIG 3 unter der sichtbaren Isolierung) verläuft parallel zu der Neigungsebene. Der sich unter der geneigten Spule 13 ergebende Freiraum lässt sich ebenfalls für eine Verschaltungseinrichtung 23 nutzen. Auch hier stützt ein Isolator 24 einen Kupferleiter 25 gegenüber der Spule 12 ab.

Die in FIG 3 vorne eingezeichnete Spule 11 ist nach unten geneigt. Die Ebene, die durch ihre Mittellinie 15 in ihren Bogenbereich aufgespannt ist, verläuft parallel zu der Stirnfläche 10 des Blechpakets 9. Die Spule 11 ist hier wieder abgeschrägt. D. h. ihre in der Längsseitenansicht betrachtete Kontur 26 bzw. die Mittellinie der Scheitel ihrer Teilleiterbögen nimmt gegenüber der Neigungsebene 19 den Winkel β ein. Der Winkel der Kontor 26 zu der durch die Mittellinie 15 definierten Ebene beträgt demnach 90°- β. Auch bei der Spule 11 ist in dem Schrägungsbereich eine Verschaltungseinrichtung 27 angeordnet. Sie umfasst hier einen Isolator 28, der hier einen ersten Kupferleiter 29 und einen zweiten Kupferleiter 30 gegenüber der Spule 11 abstützt.

Dadurch, dass die Teilleiter einer Spule (im Beispiel von FIG 3 die Spulen 11 und 13) nicht senkrecht übereinander liegen, können die verbliebenen Hohlräume zwischen den Spulen besser ausgenutzt werden. Die Teilleiter der Spulen werden von Ebene zu Ebene soweit verkürzt, dass gerade noch die notwendigen Luft- und Kriegstrecken eingehalten werden. Die Leiterlängen und damit die Verlusten sinken. Der Platzbedarf verringert sich und die entstehenden Freiräume können zum Aufbau der Ringleitung, zum Verlegen von Kabeln oder Kühlleitungen genutzt werden.

In vorteilhafter Weise lässt sich somit die Leiterlänge im Wickelkopf minimieren. Dadurch sinken die Verluste und der Wirkungsgrad steigt. Das gezeigte Prinzip ist nicht nur, wie in FIG 3 gezeigt, für Drei-Etagenwicklungen ausführbar, sondern kann bei jeder konzentrischen Spule angewandt werden.

Durch die Anwendung des erfindungsgemäßen Aufbauprinzips werden die Spulen der unterschiedlichen Phasen (z.B. sind die Spulen 11, 12 und 13 den Phasen U, V und W zugeordnet) im Allgemeinen eine unterschiedliche Länge aufweisen. Da der ohmsche Widerstand der Spulen nicht bestimmend für das Betriebsverhalten ist, hat dies im Allgemeinen keine negativen Auswirkungen.

## Patentansprüche

1. Aktivteil einer elektrischen Maschine mit
- einem Träger (9), der als zylinderförmiges Blechpaket ausgebildet ist,
- mehreren Spulen (11, 12, 13), die an dem Träger (9) angeordnet sind und die jeweils mehrere Teilleiter (14) aufweisen, und
- einem Wickelkopfbereich, in dem die Spulen (11, 12, 13) jeweils bogenförmig aus dem Träger (9) ragen und miteinander verschaltet sind, wobei jede der Spulen (11, 12, 13) im Wickelkopfbereich einen Spulenbogen besitzt und die Mittellinie (15, 16, 17) der Spule in dem Spulenbogen im Wesentlichen in einer Ebene verläuft, und die Teilleiter (14) der Spule in dem Spulenbogen der Spule parallel zu der Ebene verlaufen und selbst jeweils Teilleiterbögen bilden, wobei die Scheitelpunkte (18) der Teilleiterbögen der Spule eine
Neigungslinie bilden, wobei die Neigungslinie jeder der Spulen (11, 12, 13) sowohl schräg zu einer Stirnfläche (10) des Trägers (9) als auch schräg zu der Hauptachse des Trägers (9) angeordnet ist,
wobei
die Ebenen von drei benachbarten Spulen die Winkel 0°, 45° und 90° gegenüber einer Stirnfläche (10) des Trägers (9) einnehmen, aus der die Spulen (11, 12, 13) ragen.

2. Aktivteil nach Anspruch 1, das als Ständer oder Läufer ausgebildet ist.

3. Aktivteil nach Anspruch 1 oder 2, wobei an der Neigungslinie der Teilleiterbögen der Spule ein Verschaltungselement (20, 23, 27) angeordnet ist.

4. Aktivteil nach Anspruch 2, wobei die mehreren Spulen (11, 12, 13) im Ständer oder Läufer in Umfangsrichtung verteilt angeordnet sind und die jeweiligen Ebenen benachbarter Spulen im Wickelkopfbereich relativ zueinander geneigt sind.

5. Aktivteil nach einem der vorhergehenden Ansprüche, wobei den drei benachbarten Spulen die Phasen U, V und W eines Drehstromsystems zugeordnet sind.

6. Aktivteil nach einem der vorhergehenden Ansprüche, wobei die Spulen (11, 12, 13) konzentrische Spulen sind.

7. Aktivteil nach einem der vorhergehenden Ansprüche, wobei die drei Spulen unterschiedliche Längen besitzen.

8. Motor oder Generator mit einem Aktivteil gemäß einem der vorhergehenden Ansprüche.

## Claims

1. Active part of an electrical machine, having
- a carrier (9) which is designed as a cylindrical laminated core,
- a plurality of coils (11,12,13), which are arranged on the carrier (9) and which each comprise a plurality of sub-conductors (14), and
- a winding head area, in which the coils (11,12,13) each project out of the carrier (9) in an arced shape and are connected to one another, wherein each of the coils (11,12,13) has a coil arc in the winding head area, and the centre line (15,16,17) of the coil essentially runs in one plane in the coil arc, and the sub-conductors (14) of the coil run parallel to the plane in the coil arc of the coil and themselves in each case form sub-conductor arcs, wherein the vertices (18) of the sub-conductor arcs of the coil form a line of inclination, wherein the line of inclination of each of the coils (11,12,13) is arranged both at an angle to a front face (10) of the carrier (9) and at an angle to the main axis of the carrier (9),
wherein
the planes of three adjacent coils occupy the angles 0°, 45° and 90° in respect of a front face (10) of the carrier (9), from which the coils (11,12,13) project.

2. Active part according to claim 1, which is designed as a stator or rotor.

3. Active part according to claim 1 or 2, wherein a connecting element (20,23,27) is arranged on the line of inclination of the sub-conductor arcs of the coil.

4. Active part according to claim 2, wherein the plurality of coils (11,12,13) are distributed in the peripheral direction in the stator or rotor and the respective planes of adjacent coils are at an angle relative to one another in the winding head area.

5. Active part according to one of the preceding claims, wherein the three adjacent coils are assigned the phases U, V and W of a three-phase system.

6. Active part according to one of the preceding claims, wherein the coils (11,12,13) are concentric coils.

7. Active part according to one of the preceding claims, wherein the three coils are of different lengths.

8. Motor or generator with an active part according to one of the preceding claims.

## Revendications

1. Partie active d'une machine électrique comprenant
- un support (9) constitué sous la forme d'un paquet de tôles de forme cylindrique,
- plusieurs bobines (11, 12, 13), qui sont disposées sur le support (9) et qui ont respectivement plusieurs sous-conducteurs (14) et
- une partie de tête d'enroulement, dans laquelle les bobines (11, 12, 13) sortent chacune en forme d'arc du support (9) et sont câblées entre elles, chacune des bobines (11, 12, 13), dans la partie de tête d'enroulement, ayant un arc de bobine et la ligne (15, 16, 17) médiane de la bobine, dans l'arc de la bobine, s'étend sensiblement dans un plan et les sous-conducteurs (14) de la bobine, dans l'arc de la bobine, s'étendent parallèlement au plan et forment eux-mêmes respectivement des arcs de sous-conducteurs, les points (18) culminants des arcs de sous-conducteurs de la bobine formant une ligne d'inclinaison, la ligne d'inclinaison de chacune des bobines (11, 12, 13) étant à la fois inclinée par rapport à une surface (10) frontale du support (9) et inclinée par rapport à l'axe principal du support (9),
dans laquelle
les plans de trois bobines voisines font des angles de 0°, 45° et 90° par rapport à une surface (10) frontale du support (9), dont font saillie les bobines (11, 12, 13).

2. Partie active suivant la revendication 1, **caractérisée en ce qu'**elle est constituée en stator ou en rotor.

3. Partie active suivant la revendication 1 ou 2, dans laquelle un élément (20, 23, 27) de câblage est disposé sur la ligne d'inclinaison des arcs de sous-conducteurs de la bobine.

4. Partie active suivant la revendication 2, dans laquelle les plusieurs bobines (11, 12, 13) du stator ou du rotor
sont réparties dans la direction périphérique et les plans de bobines voisines sont dans la partie de tête d'enroulement inclinés les uns par rapport aux autres.

5. Partie active suivant l'une des revendications précédentes, dans laquelle les phases U, V et W d'un système triphasé sont associées aux trois bobines.

6. Partie active suivant l'une des revendications précédentes, dans laquelle les bobines (11, 12, 13) sont des bobines concentriques.

7. Partie active suivant l'une des revendications précédentes, dans laquelle les trois bobines ont des longueurs différentes.

8. Moteur ou génératrice ayant une partie active suivant l'une des revendications précédentes.
